# EUROPEAN PATENT SPECIFICATION

(11) **EP 1 510 091 B1**
(45) Date of publication and mention of the grant of the patent: **16.04.2008**
(21) Application number: 03727821.5
(22) Date of filing: 27.05.2003
(51) Int. Cl.: H04Q 7/32

(54) **Communication method, Communication device and SIM-card with a directory**
Kommunikationsverfahren, Kommunikationsgerät und SIM-Karte mit einem Verzeichnis
Méthode de communication, dispositif de communication et carte SIM comprennant un annuaire

(30) Priority: 31.05.2002 EP 02291345
(43) Date of publication of application: 02.03.2005
(73) Proprietor: Axalto S.A., 92120 Montrouge (FR); Schlumberger Malco, Inc., Owings Mills, MD 21117 (US)
(72) Inventor: LAMBERT, Jean-Marc, F-78530 Buc (FR)
(74) Representative: Jacquot, Ludovic R. G.
(86) International application number: PCT/IB2003/002277
(87) International publication number: WO 2003/103318

(56) References cited:
- EP-A- 0 693 860
- EP-A- 1 091 607
- WO-A-99/29127
- DE-A- 10 040 798
- US-A- 6 011 976

## Description

### FIELD OF THE INVENTION

The invention relates to a communication device comprising a directory having an entry. The communication device can be, for example, a mobile phone, a computer or Personal Digital Assistant (PDA). The invention also concerns a method of using such a communication device. The invention also concerns a computer program product for such a communication device. The invention also concerns an integrated circuit card comprising a directory having an entry. The integrated circuit card can be for example, a SIM (subscriber identity module) card, The integrated circuit card can be also a card as defined in the ISO 7816 standard.

### BACKGROUND OF THE INVENTION

It is known that a mobile can send Short Message Services (SMS) messages. The mobile phone may comprise a phone book with several entries. Each entry comprises a name, which is associated with a phone number. The phonebook, may be stored in a SIM card that is inserted in the mobile phone.

To send an SMS, a user opens the menu "NEW SMS", writes the text, opens the phonebook, selects the appropriate entry and clicks on the corresponding name. When the user clicks on the name, the written SMS will be sent to the phone number associated to the selected name.

WO 99/29127 discloses a method and apparatus for altering the phone book entries of a cellular phone. The short message service header includes a tag identifying the data included in the short message service as a phone book entry. The mobile station reads the short message service header tag identifying the data as a phone book entry, automatically decodes the phone book fields and enters them into the standard phone book memory of the mobile phone.

DE 10040798 discloses a method for recording a new phone book entry in a mobile station automatically.

### SUMMARY OF THE INVENTION

It is an object of the invention to enhance the functionality of the communication device.

According to one aspect of the invention, a communication device comprises a directory having an entry that defines a message, the communication device being arranged to verify if a selected entry defines a message, if so, retrieves the message defined by the selected entry.

To send a message a user just needs to select the corresponding entry in the directory and to click on it. Regarding the above-mentioned prior art it is much easier for a user to send a message. In particular, WO 99/29127 discloses a phone book having an entry that defines simple data to be read rather than a message comprising data to be sent. Therefore, the invention enhances the functionality of the communication device.

These and other aspects of the invention will be described in greater detail hereinafter with reference to drawings.

### BRIEF DESCRIPTION OF THE DRAWINGS

- Figure 1 illustrates a wireless network system;
- Figure 2 illustrates a method of entering a new service entry in a phonebook;
- Figure 3 illustrates a method of using a service entry of a phonebook;
- Figure 4 illustrates the structure of a SMS message;
- Figure 5 illustrates how a phonebook can be updated.

### DETAILED DESCRIPTION

To better understand the invention, the invention will be illustrated in the context of the activation of services, which are accessible with SMS.
But this particular embodiment should not be understood as limiting the scope of the invention.

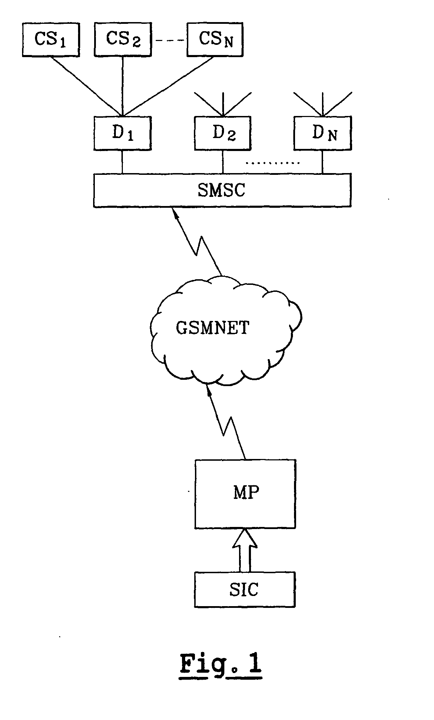

Fig. 1 illustrates a wireless network system. The wireless network system includes a SIM card SIC to be inserted in a mobile phone MP. The mobile phone MP can send/receive SMS to/from a SMS Center SMSC via a GSM network GSMNET. The SMS Center SMSC also communicates with a plurality of dispatchers D1, D2, .., Dn. A dispatcher D1, D2, .. Dn communicates with a plurality of content server CS1, CS2, .. CSn. A content server is associated with a specific service, for example, Taxi or Weather Forecast.

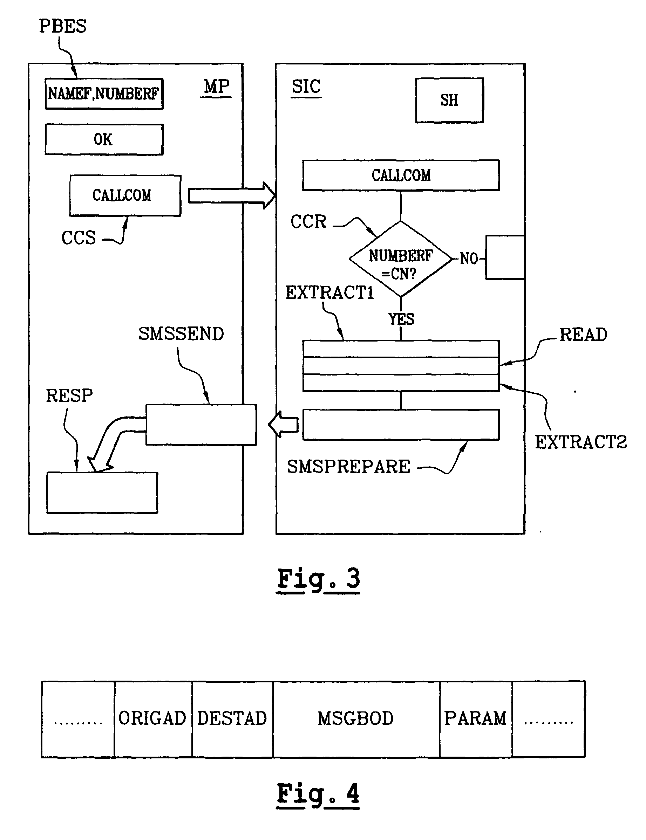

Fig. 4 illustrates the structure of an SMS message. An SMS message comprises a sender data ORIGAD related to the address of the sender, an addressee data DESTAD related to the address of the addressee, a message body MSGBOD in which the text of the SMS is stored. An SMS message also comprises other parameters PARAM.

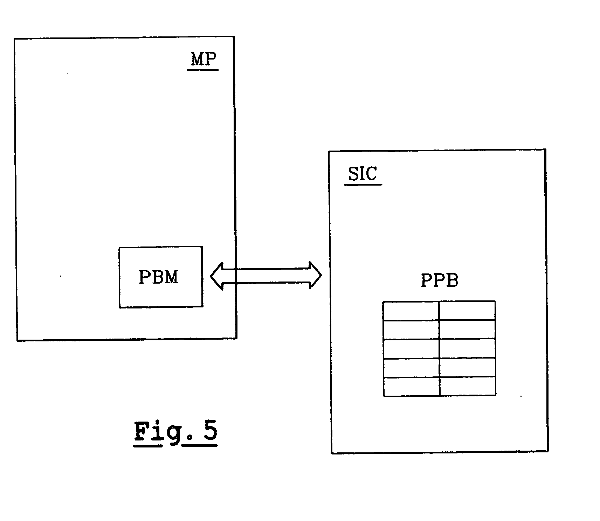

Fig. 5 illustrates how a phonebook can be updated. The SIM card SIC comprises a permanent phonebook PPB. The permanent phonebook PPB comprises a plurality of entries. An entry comprises, for example, a name and an associated phone number. The mobile phone MP also comprises a phonebook memory PBM. Once the permanent phonebook PPB is modified on the SIM card SIC, the SIM card SIC can send a refresh command to the mobile phone MP to update the phonebook memory PBM on the mobile phone MP.

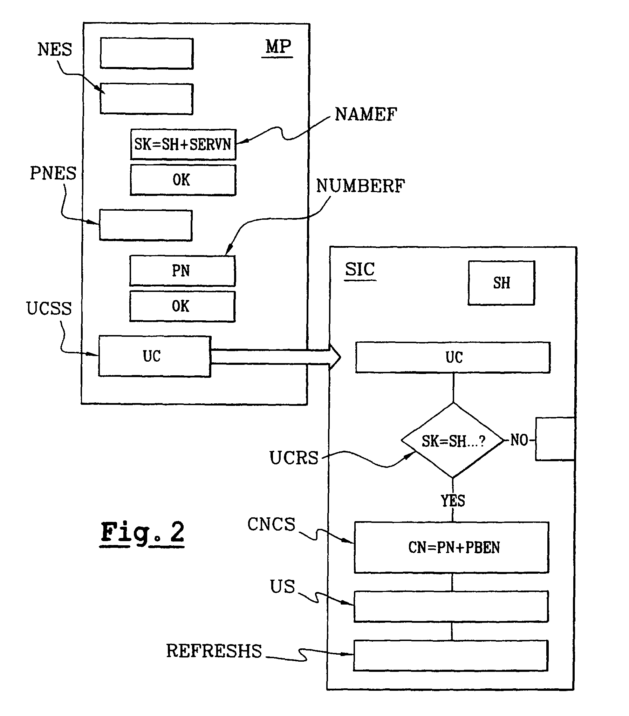

Fig. 2 illustrates a method of creating a new entry in the phonebook of the mobile phone MP, which is associated with an SMS service. A mobile phone MP communicates with a SIM card SIC.

In an entry creating step ECS, a user uses the mobile phone MP to create a new phonebook entry. This new phonebook entry has a phone book entry number PBEN, for example, 002. The entry creating step ECS comprises the following sub-steps:
- a name entering step NES, in which the user enters in a name field NAMEF a service keyword SK corresponding to a specific SMS service. Advantageously, the service keyword SK has a standard format in the form of a standard header SH which is added to the service name SERVN. For example, "SMS+" can be added to "TAXI" to get the service keyword "SMS+TAXI". The standard header SH, here "SMS+", can be stored as a parameter in the SIM card SIC.
- A phone number entering step PNES, in which the user enters in a number field NUMBERF the phone number PN of the service provider, for example, 41234, and then presses on OK.

In an updating command sending step UCSS, an updating command UC is sent to the SIM card SIC. The updating command UC can be, for example, UPDATE_ADN(SK;PN;PBEN) in particular UPDATE_ADN("SMS+TAXI";"41234";"002").

In a updating command running step UCRS, the SIM card SIC receives the updating command UC and checks if the service keyword SK starts, for example, with the standard header SH.
If not, the SIM card SIC stores the new phone book entry without any changes.
If the service keyword SK starts with the standard header SH:
- in a combined number computing step CNCS, a combined number CN is computed using the phone number PN and, for example, the phonebook entry number PBEN. The combined number CN can be, for example, PN+PBEN, for example, "41234+002" for a storage in the second entry of the phonebook;
- in an updating step US, the service keyword SK and the corresponding computed combined number CN are stored in the phonebook, more specially in the permanent phonebook PPB of the SIM card SIC. For example, UPDATE_ADN("SMS+TAXI","41234+002") can be executed. Here "SMS+TAXI" and the associated combined number "41234+002" will be stored under the phone entry number PBEN 002 in the permanent phonebook PPB of the SIM card SIC.
- in a refreshing step REFRESHS, a refresh command is sent to the mobile phone MP to update the corresponding entry in the phonebook memory PBM of the mobile phone MP (see figure 5).

Fig. 3 illustrates a method of using an entry of the phonebook to activate an SMS service. A mobile phone MP communicates with a SIM card SIC.

In a phone book entry selecting step PBES, a user uses the mobile phone MP to select an existing entry in the phonebook. The selected entry has a name field NAMEF and a number field NUMBERF.

In a call control sending step CCS, the user clicks on OK, so that the mobile phone MP sends a call control command CALLCOM related to the selected phonebook entry. The call control command CALLCOM comprises as parameter the content of the number field NUMBERF of the selected entry of the phonebook, for example, Call_Control_(NUMBERF).

In a call control running step CCR, the SIM card SIC receives the call control command CALLCOM and checks if the content of the number field NUMBERF is a combined number CN.
If not, the content of the number field NUMBERF will be considered as a regular phone number PN, which will be normally dialled.
If the content of the number field NUMBERF corresponds to a combined number CN:
- in an first extracting step EXTRACT1, the phonebook entry number PBEN and the phone number PN are extracted from the combined number CN;
- in a reading step READ, the content of the name field NAMEF, which corresponds to a service keyword SK, is read using the extracted phone book entry number PBEN;
- in a second extracting step EXTRACT2, the service name SERVN is extracted from the service keyword SK.
- In an SMS preparing step SMSPREPARE, the service name SERVN is put in the message body of an SMS.
- In an SMS sending step SMSSEND, the prepared SMS is sent to the SMS center SMSC via the GSM network using the phone number PN as addressee data DESTAD (see figure 4). The SMS center SMSC will then redirect the SMS to the appropriate content server SC. For example the content server for TAXI services. The sending of the SMS will be treated by the requested content server SC, as a service request. In a responding step RESP, the content server SC sends an SMS to the mobile phone MP of the user by using a sender data ORIGAD which was in the SMS sent by the user as illustrated in Fig.4. Instead of sending an SMS to the mobile phone MP of the user, the user could also receive a phone call or any other means of communication that a mobile phone can perform.

Other advantages of the invention are the reducing of the cost and the improving of the convenience for the users. In the above mentioned description the invention uses the existing phonebook of the mobile equipment (SIC,MP). The invention is thus easier to implement and user friendly.

The description hereinbefore illustrates a communication device comprising a directory having an entry that defines a message, the communication device being arranged to verify if a selected entry defines a message, if so, retrieves the message defined by the selected entry.

According to the invention, a message comprises data to be sent.
The communication device can be, for example, a mobile phone. The communication device can also be a Personal Digital Assistant (PDA) and more generally any other device arranged to send messages.

There are various manners, in which the communication device can verify that the selected entry defines a message.
As illustrated in the above-mentioned description the phonebook entry number PBEN was added to the phone number PN to get a combined number CN. But there are many other possibilities to get a combined number CN. For example, when creating a new entry the service name SERVN could be added to the phone number PN to get a combined number CN. In this case, when using this new entry, the SIM card SIC would extract directly the phone number PN and the service name SERVN from the combined number CN to send a message.
As illustrated in the above mentioned description the service keyword SK was an addition of a standard header SH and a service name SERVN, for example, "SMS+" and "TAXI". But there are other manners to get a service keyword SK. For example, other data could be added to build this service keyword SK. For example, we could have "SMS+" and "WEATHERFORECAST+" and "PARIS" to get the service keyword SK "SMS+WEATHERFORECAST+PARIS", so that the user receives the weather forecast for Paris only. If needed, these other data could also be used to distinguish services, which are available with the same phone number PN, for example, TAXI and WEATHER FORECAST and 41312. In this case, we could have as service keywords, "SMS+TAXI+id1" and "SMS+WEATHERFORECAST+id2"

The invention is not limited to SMS. The invention can be implemented, for example, for GPRS or UMTS or any other possible means of communication. The communication device may comprise, for example, a directory having an entry that defines any other kind of text messages or voice messages or image messages or video messages or a combination of these different messages and more generally any other means of communication.

## Claims

1. A communication device (MP) enabled for sending a message having a message body (MSGBOD) over a communication network, the communication device having
- a phonebook directory (PBES) having entries comprising destination data,
**characterized in that**:
some of the entries have destination data having a specific characteristic,
the communication device comprising:
- means for selecting an entry of the directory,
- means for checking (CCR) if the selected entry comprises destination data having a specific characteristic,
- means for retrieving, when the destination data has the specific characteristic, a keyword from the entry,
- means for preparing a message (SMSPREPARE) by putting the keyword into the message body (MSGBOD).

2. The communication device (MP) according to claim 1, **characterized in that** the communication device (MP) is a mobile communication device.

3. A communication method for sending a message having a message body (MSGBOD) over a communication network, the communication method using
- a phonebook directory (PBES) having entries comprising destination data,
**characterized in that**:
some of the entries have destination data having a specific characteristic,
the communication method comprising:
- selecting an entry of the directory,
- checking (CCR) if the selected entry comprises destination data having a specific characteristic,
- retrieving, when the destination data has the specific characteristic, a keyword from the entry,
- preparing a message (SMSPREPARE) by putting the keyword into the message body (MSGBOD).

4. The communication method according to claim 3, **characterized in that** the method is carried out for communication over a mobile communication network.

5. The communication method according to claim 3, **characterized in that** the method is carried out inside a mobile communication device.

6. The communication method according to claim 3, **characterized in that** the method is carried out inside a SIM-card (SIC).

7. The communication method according to claim 3, **characterized in that**, when the destination data does not have the specific characteristic, the method comprises
- extracting a phone number from the entry,
- placing a call to the extracted phone number.

8. The communication method according to anyone of claims 3-7, **characterized in that** the message is a SMS-message.

9. The communication method according to claim 3, **characterized in that** the communication device (MP) is a mobile communication device and the message is a video message.

10. A SIM-card (SIC) for being used in a communication device (MP) enabled for sending a message having a message body (MSGBOD) over a communication network, the communication device (MP) having
- a phonebook directory (PBES) having entries comprising destination data,
**characterized in that**:
some of the entries have destination data having a specific characteristic,
the SIM-card (SIC) comprising:
- means for selecting an entry of the directory,
- means for checking (CCR) if the selected entry comprises destination data having a specific characteristic,
- means for retrieving, when the destination data has the specific characteristic, a keyword from the entry,
- means for preparing a message (SMSPREPARE) by putting the keyword into the message body (MSGBOD).

11. A computer program product comprising instructions for executing the method of claim 3 when carried out on a processor.

## Patentansprüche

1. Ein Kommunikationsgerät (MP), das zur Versendung einer Nachricht, die einen Nachrichtenkörper (MSGBOD) hat, über ein Kommunikationsnetzwerk in der Lage ist; das Kommunikationsgerät hat
- ein Telefonbuchverzeichnis (PBES) mit Einträgen, die Zieldaten enthalten; das **dadurch gekennzeichnet ist, dass**:
einige der Einträge Zieldaten enthalten, die eine bestimmte Eigenschaft haben,
das Kommunikationsgerät umfasst:
- Mittel, um einen Eintrag des Verzeichnisses auszuwählen,
- Mittel, um zu überprüfen (CCR), ob der ausgewählte Eintrag Zieldaten enthält, die eine bestimmte Eigenschaft haben,
- Mittel, um ein Passwort aus dem Eintrag abzurufen, wenn die Zieldaten die bestimmte Eigenschaft haben,
- Mittel, um eine Nachricht vorzubereiten (SMSPREPARE), indem das Passwort in den Nachrichtenkörper (MSGBOD) eingefügt wird.

2. Das Kommunikationsgerät (MP) gemäß Anspruch 1, das **dadurch gekennzeichnet ist, dass** das Kommunikationsgerät (MP) ein mobiles Kommunikationsgerät ist.

3. Eine Kommunikationsmethode für die Versendung einer Nachricht, die einen Nachrichtenkörper (MSGBOD) hat, über ein Kommunikationsnetzwerk; die Kommunikationsmethode nutzt
- ein Telefonbuchverzeichnis (PBES) mit Einträgen, die Zieldaten enthalten; das **dadurch gekennzeichnet ist, dass**:
einige der Einträge Zieldaten enthalten, die eine bestimmte Eigenschaft haben,
die Kommunikationsmethode umfasst:
- Auswahl eines Eintrags des Verzeichnisses,
- Prüfung (CCR), ob der ausgewählte Eintrag Zieldaten enthält, die eine bestimmte Eigenschaft haben,
- Abruf eines Passworts aus dem Eintrag, wenn die Zieldaten die bestimmte Eigenschaft haben,
- Vorbereitung einer Nachricht (SMSPREPARE), indem das Passwort in den Nachrichtenkörper (MSGBOD) eingefügt wird.

4. Die Kommunikationsmethode gemäß Anspruch 3, die **dadurch gekennzeichnet ist, dass** die Methode zur Kommunikation über ein mobiles Kommunikationsnetzwerk durchgeführt wird.

5. Die Kommunikationsmethode gemäß Anspruch 3, die **dadurch gekennzeichnet ist, dass** die Methode in einem mobilen Kommunikationsgerät durchgeführt wird.

6. Die Kommunikationsmethode gemäß Anspruch 3, die **dadurch gekennzeichnet ist, dass** die Methode in einer SIM-Karte (SIC) durchgeführt wird.

7. Die Kommunikationsmethode gemäß Anspruch 3, die **dadurch gekennzeichnet ist, dass** die Methode die folgenden Dinge umfasst, wenn die Zieldaten nicht die bestimmte Eigenschaft haben
- Entnahme einer Telefonnummer aus dem Eintrag,
- Anmeldung eines Anrufs an die entnommene Telefonnummer.

8. Die Kommunikationsmethode gemäß den Ansprüchen 3-7, die **dadurch gekennzeichnet ist, dass** die Nachricht eine SMS-Nachricht ist.

9. Die Kommunikationsmethode gemäß Anspruch 3, die **dadurch gekennzeichnet ist, dass** das Kommunikationsgerät (MP) ein mobiles Kommunikationsgerät und die Nachricht eine Videonachricht ist.

10. Eine SIM-Karte (SIC), die zur Verwendung in einem Kommunikationsgerät (MP) bestimmt ist, das zur Versendung einer Nachricht, die einen Nachrichtenkörper (MSGBOD) hat, über ein Kommunikationsnetzwerk in der Lage ist; das Kommunikationsgerät (MP) hat
- ein Telefonbuchverzeichnis (PBES) mit Einträgen, die Zieldaten enthalten; das **dadurch gekennzeichnet ist, dass**:
einige der Einträge Zieldaten enthalten, die eine bestimmte Eigenschaft haben,
die SIM-Karte (SIC) umfasst:
- Mittel, um einen Eintrag des Verzeichnisses auszuwählen,
- Mittel, um zu überprüfen (CCR), ob der ausgewählte Eintrag Zieldaten enthält, die eine bestimmte Eigenschaft haben,
- Mittel, um ein Passwort aus dem Eintrag abzurufen, wenn die Zieldaten die bestimmte Eigenschaft haben,
- Mittel, um eine Nachricht vorzubereiten (SMSPREPARE), indem das Passwort in den Nachrichtenkörper (MSGBOD) eingefügt wird.

11. Ein Computerprogrammprodukt, das Anweisungen für die Durchführung der Methode von Anspruch 3 enthält, wenn sie auf einem Prozessor durchgeführt wird.

## Revendications

1. Un appareil de communication (MP) apte à envoyer un message possédant un corps de message (MSGBOD) sur un réseau de communication, l'appareil de communication ayant
- un répertoire téléphonique (PBES) ayant des entrées comprenant des données de destination, **caractérisé en ce que** :
certaines entrées possèdent des données de destination ayant une caractéristique.spécifique,
l'appareil de communication comprenant :
- des moyens pour sélectionner une entrée du répertoire,
- des moyens pour vérifier (CCR) si l'entrée sélectionnée comprend des données de destination ayant une caractéristique spécifique, .
- lorsque les données de destination ont la caractéristique spécifique, des moyens pour récupérer un mot clé de l'entrée,
- des moyens pour préparer un message (SMSPREPARE) en mettant le mot clé dans le corps de message (MSGBOD).

2. L'appareil de communication (MP), conformément à la revendication 1, **caractérisé en ce que** l'appareil de communication (MP) est un appareil de communication mobile.

3. Une méthode de communication pour l'envoi d'un message ayant un corps de message (MSGBOD) sur un réseau de communication, la méthode de communication utilisant
- un répertoire téléphonique (PBES) possédant des entrées ayant des données de destination,
**caractérisé en ce que** :
certaines entrées possèdent des données de destination ayant une caractéristique spécifique,
la méthode de communication comprenant :
- la sélection d'une entrée du répertoire,
- la vérification (CCR) du fait que l'entrée sélectionnée comprend des données de destination ayant une caractéristique spécifique,
- lorsque les données de destination ont la caractéristique spécifique, la récupération d'un mot clé de l'entrée,
- la préparation d'un message (SMSPREPARE) en mettant le mot clé dans le corps de message (MSGBOD).

4. La méthode de communication conformément à la revendication 3, **caractérisée en ce que** la méthode est utilisée pour la communication sur un réseau de communication mobile.

5. La méthode de communication, conformément à la revendication 3, **caractérisée en ce que** la méthode est exécutée dans un appareil de communication mobile.

6. La méthode de communication, conformément à la revendication 3, **caractérisée en ce que** la méthode est exécutée dans une carte SIM (SIC).

7. La méthode de communication, conformément à la revendication 3, **caractérisée en ce que**, lorsque les données de destination n'ont pas la caractéristique spécifique, la méthode comprend
- l'extraction d'un numéro de téléphone de l'entrée,
- le passage d'un appel au numéro de téléphone extrait.

8. La méthode de communication, conformément à l'une des revendications 3 à 7, **caractérisée en ce que** le message est un message SMS.

9. La méthode de communication, conformément à la revendication 3, **caractérisée en ce que** l'appareil de communication (MP) est un appareil de communication mobile et le message est un message vidéo.

10. Une carte SIM (SIC) pour être utilisée dans un appareil de communication (MP) apte à envoyer un message possédant un corps de message (MSGBOD) sur un réseau de communication, l'appareil de communication (MP) ayant
- un répertoire téléphonique (PBES) ayant des entrées comprenant des données de destination, **caractérisées en ce que** :
certaines entrées possèdent des données de destination ayant une caractéristique spécifique,
la carte SIM (SIC) comprenant :
- des moyens pour sélectionner une entrée du répertoire,
- des moyens pour vérifier (CCR) si l'entrée sélectionnée comprend des données de destination ayant une caractéristique spécifique,
- lorsque les données de destination ont la caractéristique spécifique, des moyens pour récupérer un mot clé de l'entrée,
- des moyens pour préparer un message (SMSPREPARE) en mettant le mot clé dans le corps de message (MSGBOD).

11. Un programme informatique comprenant des instructions pour l'exécution de la méthode de la revendication 3 lorsqu'elle est réalisée sur un processeur.
